(19) Europäisches Patentamt
European Patent Office
Office européen des brevets

(11) EP 3 112 392 B1

# (12) EUROPEAN PATENT SPECIFICATION

(45) Date of publication and mention of the grant of the patent:
**15.11.2017 Bulletin 2017/46**

(21) Application number: **15754863.7**

(22) Date of filing: **25.02.2015**

(51) Int Cl.:
***C08G 64/06*** *(2006.01)*

(86) International application number:
**PCT/JP2015/056272**

(87) International publication number:
**WO 2015/129921 (03.09.2015 Gazette 2015/35)**

## (54) POLYCARBONATE AND OPTICAL MEMBER INCLUDING SAME

POLYCARBONAT UND OPTISCHES ELEMENT DAMIT

POLYCARBONATE ET ÉLÉMENT OPTIQUE COMPRENANT CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2014 JP 2014038772**

(43) Date of publication of application:
**04.01.2017 Bulletin 2017/01**

(73) Proprietor: **Teijin Limited**
**Osaka-shi, Osaka 541-0054 (JP)**

(72) Inventors:
- **SHIGEMATSU Teruyuki**
  **Osaka-shi**
  **Osaka 541-0054 (JP)**
- **MATSUI Manabu**
  **Osaka-shi**
  **Osaka 541-0054 (JP)**

(74) Representative: **Adam, Holger**
**Kraus & Weisert**
**Patentanwälte PartGmbB**
**Thomas-Wimmer-Ring 15**
**80539 München (DE)**

(56) References cited:
**WO-A1-2014/073496**
**JP-A- H 107 782**
**JP-A- S6 363 718**
**JP-A- H11 269 259**
**JP-A- 2001 072 872**
**JP-A- 2009 249 307**
**JP-A- 2010 275 412**
**JP-A- 2014 185 325**
**JP-A- 2014 205 829**

- **DATABASE WPI Week 201082 Thomson Scientific, London, GB; AN 2010-Q02933 XP002763674, -& JP 2010 275412 A (TEIJIN KASEI LTD) 9 December 2010 (2010-12-09)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 112 392 B1

## Description

TECHNICAL FIELD

The present invention relates to a polycarbonate having high transparency, a high refractive index, low birefringence, moldability and moist heat resistance and to an optical member comprising the same.

BACKGROUND ART

Use of polyester resin, polycarbonate resin and polyester carbonate resin which are obtained from bisphenols is now under study in optical members such as car head lamp lenses, camera lenses and optical disks as materials having heat resistance, transparency, impact resistance and a high refractive index. Reflecting efforts to reduce the thickness, weight and size of each of the optical members, optical properties including a high refractive index and a low photoelastic constant are being investigated.

For instance, Patent Document 1 proposes a polyester having a binaphthol skeleton and a high refractive index. However, the polyester has low moist heat resistance.

Patent Document 2 proposes a copolycarbonate having a binaphthol skeleton and excellent solution stability and abrasion resistance. However, as the binaphthol structure of this copolycarbonate is directly bonded to a carbonate bond, the copolycarbonate has low fluidity and is inferior in moldability due to the inflexibility of the polymer structure.

Meanwhile, Patent Document 3 proposes a copolycarbonate having a unit derived from 10,10-bis(4-hydroxyphenyl)anthrone and a unit derived from a fluorene compound as a polycarbonate having a high refractive index. However, this copolycarbonate has low fluidity and is inferior in moldability as well.

Patent Document 4 which was published internationally after the filing of Patent Application No. 2014-038772 as the basic application of the present application proposes a copolycarbonate having a unit derived from 2,2'-bis(2-hydroxyethoxy)-1,1'-binaphthyl.

(Patent Document 1) JP-A 2002-332345
(Patent Document 2) JP-A 10-7782
(Patent Document 3) JP-A 2010-275412
(Patent Document 4) WO2014/073496

DISCLOSURE OF THE INVENTION

It is therefore an object of the present invention to provide a polycarbonate having high transparency, a high refractive index, low birefringence and good balance between moldability and moist heat resistance and an optical member comprising the same.

The inventors of the present invention conducted intensive studies to achieve the above object. As a result, they found that a polycarbonate which has high transparency, a high refractive index, low birefringence and good balance between moldability and moist heat resistance and is suitable for use in optical members is obtained by using a diol component having a binaphthol skeleton and a diol component having an anthrone skeleton and arrived at the present invention.

That is, the present invention includes the following inventions.

1. A polycarbonate comprising 98 to 2 mol% of a unit represented by the following formula (I) and 2 to 98 mol% of a unit represented by the following formula (II) and having a specific viscosity measured at 20°C of a solution prepared by dissolving 0.7 g of the polycarbonate in 100 ml of methylene chloride of 0.12 to 0.40.

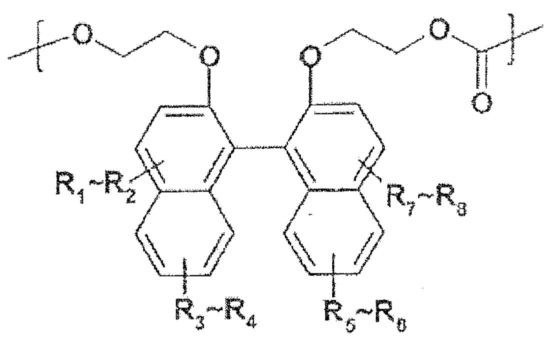

(I)

(In the formula (1), $R_1$ to $R_8$ are each independently a hydrogen atom, fluorine atom, chlorine atom, bromine atom, iodine atom, alkyl group having 1 to 6 carbon atoms, aryl group having 6 to 12 carbon atoms, alkenyl group having 2 to 6 carbon atoms, alkoxy group having 1 to 6 carbon atoms or aralkyl group having 7 to 17 carbon atoms.)

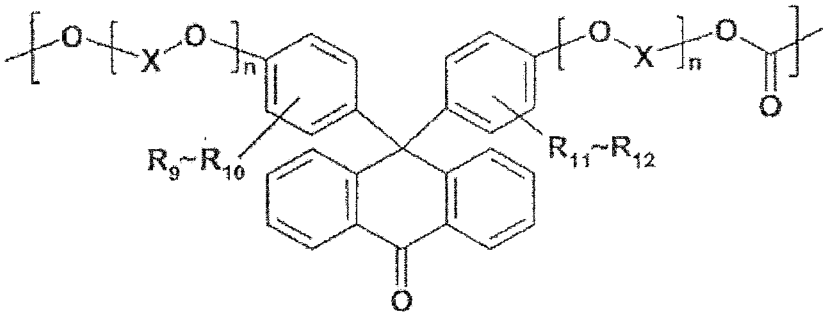

(II)

(In the formula (II), $R_9$ to $R_{12}$ are each independently a hydrogen atom, hydrocarbon group which may contain an aromatic group having 1 to 9 carbon atoms, or halogen atom. X is an alkylene group, and "n" is an integer of 0 to 3.)

2. The polycarbonate in the above paragraph 1, comprising 90 to 40 mol% of the unit represented by the formula (I) and 10 to 60 mol% of the unit represented by the formula (II) and having a specific viscosity of 0.14 to 0.40.

3. The polycarbonate in the above paragraph 1, wherein the unit represented by the formula (I) is a unit derived from 1,1-bi(2-(2-hydroxyethoxy)naphthalene).

4. The polycarbonate in the above paragraph 1, wherein the unit represented by the formula (II) is a unit derived from 10,10-bis(4-hydroxyphenyl)anthrone.

5. An optical member comprising the polycarbonate of any one of the above paragraphs 1 to 4.

6. An optical lens including the optical member of the above paragraph 5.

7. The optical lens in the above paragraph 6, wherein the thickness of a center part is 0.05 to 3.0 mm and the diameter of a lens part is 1.0 to 20.0 mm.

8. A process for producing the polycarbonate of the above paragraph 1, comprising the step of reacting a diol represented by the following formula (III), a diol represented by the following formula (IV) and a carbonate forming compound.

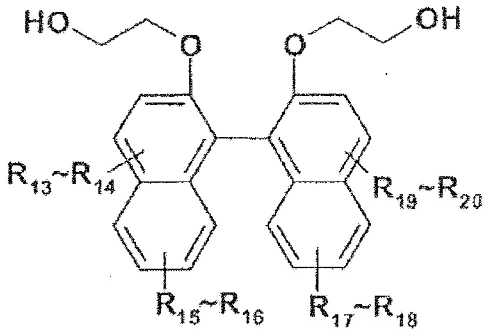

(III)

(In the formula (III), $R_{13}$ to $R_{20}$ are each independently a hydrogen atom, fluorine atom, chlorine atom, bromine atom, iodine atom, alkyl group having 1 to 6 carbon atoms, aryl group having 6 to 12 carbon atoms, alkenyl group having 2 to 6 carbon atoms, alkoxy group having 1 to 6 carbon atoms or aralkyl group having 7 to 17 carbon atoms.)

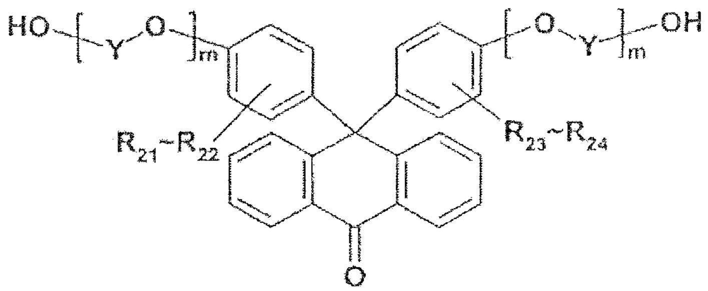

(IV)

(In the formula (IV), $R_{21}$ to $R_{24}$ are each independently a hydrogen atom, hydrocarbon group which may contain an aromatic group having 1 to 9 carbon atoms, or halogen atom, Y is an alkylene group, and "m" is an integer of 0 to 3.)

BRIEF DESCRIPTION OF THE DRAWINGS

Fig. 1 shows the proton NMR of a polycarbonate obtained in Example 4.

BEST MODE FOR CARRYING OUT THE INVENTION

Components constituting the polycarbonate of the present invention, mixing ratio thereof and preparing methods thereof will be described in detail hereinbelow.

<unit represented by formula (I)>

The polycarbonate of the present invention comprises a unit represented by the following formula (I).

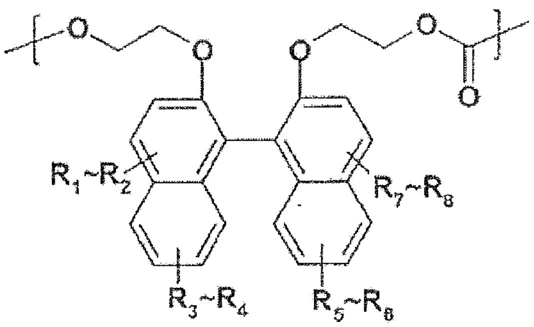

(I)

In the formula (I), $R_1$ to $R_8$ are each independently a hydrogen atom, fluorine atom, chlorine atom, bromine atom, iodine atom, alkyl group having 1 to 6 carbon atoms, aryl group having 6 to 12 carbon atoms, alkenyl group having 2 to 6 carbon atoms, alkoxy group having 1 to 6 carbon atoms or aralkyl group having 7 to 17 carbon atoms. In the unit represented by the formula (I), $R_1$ to $R_8$ are each preferably a hydrogen atom. The unit represented by the formula (I) is preferably a unit derived from 1,1-bi(2-(2-hydroxyethoxy)naphthalene).

The upper limit value of the content of the unit of the formula (I) is 98 mol%, preferably 90 mol%, more preferably 75 mol%. The lower limit value of the content is 2 mol%, preferably 5 mol%, more preferably 40 mol%, much more preferably 45 mol%. When the lower limit value is smaller than 2 mol%, the refractive index drops disadvantageously.

<unit represented by formula (II)>

The polycarbonate of the present invention comprises a unit represented by the following formula (II).

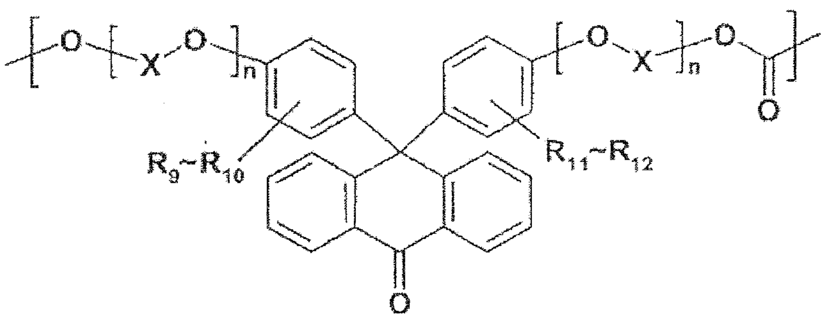

(II)

In the formula (II), $R_9$ to $R_{12}$ are each independently a hydrogen atom, hydrocarbon group which may contain an aromatic group having 1 to 9 carbon atoms, or halogen atom. X is an alkylene group, and "n" is an integer of 0 to 3. In the unit represented by the formula (II), $R_9$ to $R_{12}$ are each preferably a hydrogen atom, methyl group or phenyl group. X is preferably an ethylene group. "n" is preferably 0 to 3, more preferably 0. When "n" is larger than 3, heat resistance deteriorates disadvantageously. The unit represented by the formula (II) is preferably a unit derived from 10,10-bis(4-hydroxyphenyl)anthrone.

The lower limit value of the content of the unit of the formula (II) is 2 mol%, preferably 10 mol%, more preferably 25 mol%. The upper limit value of the content is 98 mol%, preferably 95ml%, more preferably 60 mol%, much more preferably 55 mol%.

<specific viscosity>

The specific viscosity of the polycarbonate of the present invention is 0.12 to 0.40, preferably 0.15 to 0.30, more preferably 0.18 to 0.35. The specific viscosity is measured at 20°C by dissolving 0.7 g of the polycarbonate in 100 ml of methylene chloride. When the specific viscosity is lower than 0.12, the obtained molded body becomes brittle and when the specific viscosity is higher than 0.40, melt viscosity and solution viscosity become high, whereby fluidity degrades and an injection molding failure such as filling insufficiency occurs, thereby reducing moldability.

<melt viscosity>

The melt viscosity at 260°C and a shear rate of 1,000/sec of the polycarbonate of the present invention is preferably 30 to 300 Pa·s, more preferably 30 to 250 Pa·s, much more preferably 50 to 200 Pa·s. When the melt viscosity is higher than 300 Pa·s, moldability deteriorates, whereby the optical distortion of a molded article tends to occur disadvantageously.

<refractive index>

The refractive index of the polycarbonate of the present invention is preferably 1.635 to 1.700, more preferably 1.640 to 1.700, much more preferably 1.650 to 1.700. The refractive index is measured at 25°C and a wavelength of 589 nm. When the refractive index is higher than 1.635, the spherical aberration of a lens can be reduced and the focusing distance of a lens can be shortened advantageously.

<Abbe number (ν) >

The Abbe number (ν) of the polycarbonate of the present invention is preferably 19 to 25, more preferably 19 to 24, much more preferably 19 to 23. The Abbe number is calculated from refractive indices at 25°C and wavelengths of 486 nm, 589 nm and 656 nm based on the following equation.

$$\nu = (nD-1)/(nF-nC)$$

nD: refractive index at a wavelength of 589 nm
nF: refractive index at a wavelength of 656 nm
nC: refractive index at a wavelength of 486 nm

<transmittance>

The spectral transmittance of the polycarbonate of the present invention is preferably not less than 80 %, more preferably not less than 81 %, much more preferably not less than 82 %. The transmittance is obtained by measuring a molded sheet having a thickness of 0.1 mm at a wavelength of 395 nm. A molded sheet having a spectral transmittance of less than 80 % is not preferred as an optical member.

<glass transition temperature>

The glass transition temperature (Tg) of the polycarbonate of the present invention is preferably 120°C to 170°C, more preferably 125°C to 160°C, much more preferably 130°C to 145°C. The glass transition temperature (Tg) is measured at a temperature elevation rate of 20°C/min. When Tg is lower than 120 °C, an optical part formed by using the polycarbonate becomes unsatisfactory in terms of heat resistance according to use purpose and when Tg is higher than 170°C, melt viscosity becomes high, thereby making it difficult to handle the polycarbonate at the time of forming a molded body therefrom.

<moist heat resistance>

The specific viscosity retention of the polycarbonate of the present invention after it is left at 85°C and 85 %RH (relative humidity) for 2,000 hours which is an index of moist heat resistance is preferably not less than 80%, more preferably not less than 85 %, much more preferably not less than 90 %. When the specific viscosity retention is not less than 80 %, the deterioration of color and the reduction of strength of a molded article do not occur even in the case of use under a moist heat environment and there is no limitation to the use environment of the polycarbonate advantageously. When the specific viscosity retention is less than 80 %, strength lowers by the reduction of the specific viscosity, thereby causing cracking or deformation and the deterioration of color disadvantageously.

<production process of polycarbonate>

The polycarbonate of the present invention can be produced by reacting diol components and a carbonate forming compound which is a carbonate precursor.

(diol represented by formula (III))

One of the diol components in the polycarbonate of the present invention is a diol represented by the following formula (III).

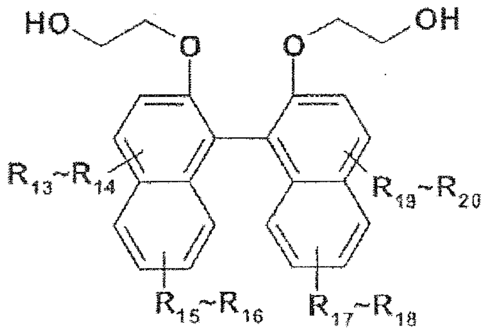

(III)

In the formula (III), $R_{13}$ to $R_{20}$ are each independently a hydrogen atom, fluorine atom, chlorine atom, bromine atom, iodine atom, alkyl group having 1 to 6 carbon atoms, aryl group having 6 to 12 carbon atoms, alkenyl group having 2 to 6 carbon atoms, alkoxy group having 1 to 6 carbon atoms or aralkyl group having 7 to 17 carbon atoms.

In the diol represented by the formula (III), $R_{13}$ to $R_{20}$ are each preferably a hydrogen atom. The diol represented by the formula (III) is preferably 1,1-bi(2-(2-hydroxyethoxy)naphthalene).

The upper limit value of the content of the diol of the formula (III) in the diol components is 98 mol%, preferably 90 mol%, more preferably 75 mol%. The lower limit value of the content is 2 mol%, preferably 5 mol%, more preferably 40 mol%, much more preferably 45 mol%. When the lower limit value is smaller than 2 mol%, the refractive index lowers disadvantageously.

(diol represented by formula (IV))

The other diol component is a diol represented by the following formula (IV).

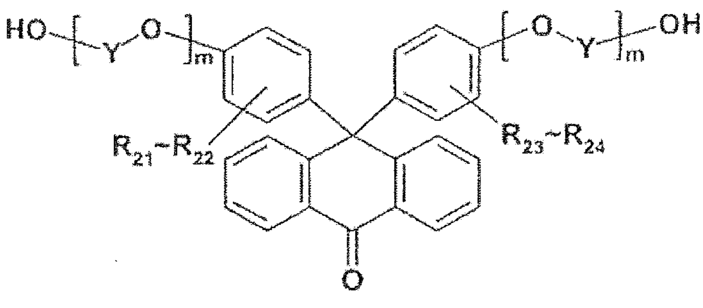

(IV)

In the formula (IV), $R_{21}$ to $R_{24}$ are each independently a hydrogen atom, hydrocarbon group which may contain

an aromatic group having 1 to 9 carbon atoms, or halogen atom, Y is an alkylene group, and "m" is an integer of 0 to 3.

In the diol represented by the formula (IV), $R_{21}$ to $R_{24}$ are each preferably a hydrogen atom, methyl group or phenyl group. Y is preferably an alkylene group, more preferably ethylene group. The diol represented by the formula (IV) is preferably 10,10-bis(4-hydroxyphenyl)anthrone.

The lower limit value of the content of the diol of the formula (IV) in the diol components is 2 mol%, preferably 10 mol%, more preferably 25 ml%. The upper limit value of the content is 98 mol%, preferably 95 mol%, more preferably 60 mol%, much more preferably 55 mol%.

(another diol)

The polycarbonate of the present invention may copolymerize another diol exemplified by aliphatic diols such as ethylene glycol, propanediol, butanediol, pentanediol and hexanediol.

Alicyclic diols such as tricyclo[5.2.1.0$^{2,6}$]decane dimethanol, cyclohexane-1,4-dimethanol, decalin-2,6-dimethanol, norbornane dimethanol, pentacyclopentadecane dimethanol, cyclopentane-1,3-dimethanol, spiroglycol, 1,4:3,6-dianhydro-D-sorbitol, 1,4:3,6-dianhydro-D-mannitol and 1,4:3,6-dianhydro-L-iditol are also included in examples of the diol.

Aromatic diols such as bis(4-hydrophenyl)methane, 1,1-bis(4-hydroxyphenyl)ethane, bis(4-hydroxyhenyl)ether, bis(4-hydroxyphenyl)sulfoxide, bis(4-hydroxyphenyl)sulfide, bis(4-hydroxyphenyl)sulfone, bis(4-hydroxyphenyl)ketone, 2,2-bis(4-hydroxyphenyl)propane, 2,2-bis(4-hydroxy-3-t-butylphenyl)propane, 2,2-bis(4-hydroxy-3-methylphenyl)propane, 1,1-bis(4-hydroxyphenyl)cyclopentane, 1,1-bis(4-hydroxyphenyl)cyclohexane, 2,2-bis(4-hydroxyphenyl)hexafluoropropane, bis(4-hydroxyphenyl)diphenylmethane, 1,1-bis(4-hydroxyphenyl)-1-phenylethane, 9,9-bis(4-hydroxyphenyl)fluorene, 9,9-bis(4-hydroxy-3-methylphenyl)fluorene, $\alpha,\omega$-bis[2-(p-hydroxyphenyl)ethyl]polydimethylsiloxane, $\alpha,\omega$-bis[3-(o-hydroxyphenyl)propyl]polydimethylsiloxane and 4,4'-[1,3-phenylenebis(1-methylethylidene)hydroxyphenyl] -1-phenylethane are further included in examples of the diol.

When the molar ratio of the diol component represented by the formula (III) to the diol component represented by the formula (IV) is 98:2 to 2:98, the birefringence of an optical lens comprising the polycarbonate becomes very small advantageously. The molar ratio is preferably 98:2 to 5:95, more preferably 98:2 to 50:50.

(carbonate forming compound)

Examples of the carbonate forming compound include phosgene, bischloroformates of 9,9-bis[4-(2-hydroxyethoxy)-3-phenylphenyl]fluorene, and diester carbonates such as diphenyl carbonate, di-p-tolyl carbonate, phenyl-p-tolyl carbonate, di-p-chlorophenyl carbonate and dinaphthyl carbonate. Out of these, diphenyl carbonate is particularly preferred.

(reaction conditions)

A reaction between diols and phosgene is carried out in the presence of an acid binder and a solvent in a nonaqueous system. Pyridine, dimethyl aminopyridine and tertiary amine are used as the acid binder. Halogenated hydrocarbons such as methylene chloride and chlorobenzene are used as the solvent. A terminal capping agent such as phenol or p-tert-butylphenol is preferably used as a molecular weight control agent. The reaction temperature is generally 0 to 40°C, and the reaction time is preferably several minutes to 5 hours.

As for a transesterification reaction, diols and a bisaryl carbonate are mixed together in the presence of an inert gas to be reacted with each other at 120°C to 350°C, preferably 150°C to 300°C under a reduced pressure in the presence of an alkali metal compound catalyst, an alkali earth metal compound or a mixed catalyst of both of them. By changing the degree of pressure reduction stepwise and reducing the pressure to 133 Pa or less in the end, the produced alcohols are distilled off to the outside of the system. The reaction time is generally 1 to 4 hours.

As for a polymerization catalyst, an alkali metal compound or an alkali earth metal compound is used as the main component and a nitrogen-containing basic compound may be used as a subordinate component as required.

Examples of the alkali metal compound used as the catalyst include sodium hydroxide, potassium hydroxide, lithium hydroxide, sodium hydrogen carbonate, potassium hydrogen carbonate, lithium hydrogen carbonate, sodium carbonate, potassium carbonate, lithium carbonate, sodium acetate, potassium acetate, lithium acetate, sodium stearate, potassium stearate, lithium stearate, sodium salts, potassium salts and lithium salts of bisphenol A, sodium benzoate, potassium benzoate and lithium benzoate. Examples of the alkali earth metal compound include calcium hydroxide, barium hydroxide, magnesium hydroxide, strontium hydroxide, calcium hydrogen carbonate, barium hydrogen carbonate, magnesium hydrogen carbonate, strontium hydrogen carbonate, calcium carbonate, barium carbonate, magnesium carbonate, strontium carbonate, calcium acetate, barium acetate, magnesium acetate, strontium acetate, calcium stearate, barium stearate, magnesium stearate and strontium stearate.

Examples of the nitrogen-containing basic compound used as the co-catalyst include tetramethylammonium hydroxide, tetraethylammonium hydroxide, tetrabutylammonium hydroxide, trimethylbenzylammonium hydroxide, trimethylamine, triethylamine, dimethylbenzylamine, triphenylamine and dimethylaminopyridine.

These catalysts may be used alone or in combination of two or more. The amount of the polymerization catalyst is $10^{-9}$ to $10^{-3}$ mole based on 1 mole of the total of the diol components. An antioxidant or a heat stabilizer may be added to improve color.

The catalyst may be removed or deactivated to keep the heat stability and hydrolysis stability of the polycarbonate of the present invention after the end of the polymerization reaction. For the alkali metal compound or the alkali earth metal compound, a method in which the deactivation of the catalyst is carried out by adding a known acid material is preferably employed. Examples of the deactivator include esters such as butyl benzoate, aromatic sulfonic acids such as p-toluenesulfonic acid, aromatic sulfonic acid esters such as butyl p-toluenesulfonate and hexyl p-toluenesulfonate, phosphoric acids such as phosphorous acid, phosphoric acid and phosphonic acid, phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite, phosphoric acid esters such as triphenyl phosphate, diphenyl phosphate, monophenyl phosphate, dibutyl phosphate, dioctyl phosphate and monooctyl phosphate, phosphonic acids such as diphenylphosphonic acid, dioctylphosphonic acid and dibutylphosphonic acid, phosphonic acid esters such as diethyl phenylphosphate, phosphines such as triphenyl phosphine and bis(diphenylphosphino)ethane, boric acids such as boric acid and phenylboric acid, aromatic sulfonic acid salts such as tetrabutyl phosphonium salts of dodecylbenzenesufonic acid, organic halides such as stearic acid chloride, benzoyl chloride and p-toluenesulfonic acid chloride, alkyl sulfates such as dimethyl sulfate, and organic halides such as benzyl chloride. These deactivators may be used in an amount 0.01 to 50 times, preferably 0.3 to 20 times the molar amount of the catalyst. When the amount is smaller than 0.01 time the molar amount of the catalyst, a deactivation effect becomes unsatisfactory. When the amount is more than 50 times the molar amount of the catalyst, heat resistance deteriorates and a molded article tends to be colored disadvantageously.

After the deactivation of the catalyst, the step of volatilizing and removing a low-boiling point compound contained in the polycarbonate at a pressure of 133 to 13.3 Pa and a temperature of 200°C to 320°C may be provided.

(additives)

The polycarbonate of the present invention may comprise various additives to provide characteristic properties as long as the object of the present invention is not impaired. Examples of the additives include a release agent, heat stabilizer, ultraviolet absorbent, bluing agent, antistatic agent, flame retardant, heat-ray shielding agent, fluorescent dye (including a fluorescent brightening agent), pigment, light diffusing agent, reinforcing filler, other resin and elastomer.

Examples of the heat stabilizer include phosphorus-based heat stabilizers, sulfur-based heat stabilizers and hindered phenol-based heat stabilizers. A phosphorus-based stabilizer and a hindered phenol-based stabilizer may be used in combination.

The ultraviolet absorbent is at least one selected from the group consisting of benzotriazole-based ultraviolet absorbents, benzophenone-based ultraviolet absorbents, triazine-based ultraviolet absorbents, cyclic iminoester-based ultraviolet absorbent and cyanoacrylate-based ultraviolet absorbents.

Examples of the bluing agent include the Macrolex Violet B and Macrolex Blue RR of Bayer AG and the Polysynthrene Blue RLS of Clariant. The bluing agent is effective in erasing the yellow tinge of a resin. Since a polycarbonate provided with weather resistance is mixed with a predetermined amount of an ultraviolet absorbent, a molded body actually tends to become yellowish due to the function and color of the ultraviolet absorbent. To provide natural transparency to a sheet or lens, the mixing of the bluing agent is very effective.

The content of each of the above stabilizers in the polycarbonate of the present invention is preferably 0.001 to 0.2 part by weight based on 100 parts by weight of the polycarbonate. The amount of the bluing agent is preferably 0.05 to 1.5 ppm, more preferably 0.1 to 1.2 ppm based on the polycarbonate. The content of the release agent in the optical lens of the present invention is preferably 0.005 to 2.0 parts by weight, more preferably 0.01 to 0.6 part by weight, much more preferably 0.02 to 0.5 part by weight based on 100 parts by weight of the polycarbonate.

Known methods may be employed to add various additives to the polycarbonate of the present invention. The methods include one in which components are mixed together in a solution state and the solvent is evaporated and one in which the components are precipitated in the solvent. From an industrial point of view, a method in which components are kneaded together in a molten state is preferred. A kneading device such as a single-screw or twin-screw extruder or kneader may be used for melt kneading. A twin-screw extruder is particularly preferred. For melt kneading, the cylinder setting temperature of the kneading device is preferably 200°C to 340°C, more preferably 250°C to 320°C. When the cylinder setting temperature is higher than 340°C, the polycarbonate decomposes, and coloring and a molding failure by a decomposed product occur frequently disadvantageously. When the cylinder setting temperature is lower than 200°C, the viscosity of the polycarbonate becomes high, thereby making it impossible to uniformly disperse the additives.

Melt kneading may be carried out in a vacuum state. By melt kneading in a vacuum state, the amount of a low molecular weight component such as the residual phenol of the polycarbonate is reduced and a molding failure can be suppressed advantageously. The degree of vacuum is preferably not more than 13.3 kPa, more preferably not more than 1.3 kPa.

For kneading, the components may be mixed together uniformly by means of a device such as a tumbler or Henschel mixer, or a predetermined amount of each component may be supplied into a kneading device separately without being mixed when necessary.

<optical member>

An optical member comprising the polycarbonate of the present invention is an optical molded article such as an optical lens exemplified by car head lamp lenses, CDs, CD-ROM pick-up lenses, Fresnel lenses, fθ lenses for laser printers, camera lenses and projection lenses for rear projection TV's, optical disk, optical element for image display media, optical film, film, substrate, optical filter or prism.

(optical lens)

The optical lens of the present invention may be formed, for example, by injection molding, compression molding, injection compression molding or casting the polycarbonate of the present invention.

The optical lens of the present invention is characterized by a small optical distortion. An optical lens comprising a general bisphenol A type polycarbonate has a large optical distortion. Although it is not impossible to reduce the value of an optical distortion by molding conditions, the condition widths are very small, thereby making molding extremely difficult. Since the polycarbonate of the present invention has an extremely small optical distortion caused by the orientation of the polycarbonate and a small molding distortion, an excellent optical element can be obtained without setting molding conditions strictly.

To manufacture the optical lens of the present invention by injection molding, it is preferred that the lens should be molded at a cylinder temperature of 260°C to 320°C and a mold temperature of 100°C to 140°C.

The optical lens of the present invention is advantageously used as an aspherical lens as required. Since spherical aberration can be substantially nullified with a single aspherical lens, spherical aberration does not need to be removed with a combination of spherical lenses, thereby making it possible to reduce the weight and the production cost. Therefore, out of optical lenses, the aspherical lens is particularly useful as a camera lens.

Since the polycarbonate of the present invention has high moldability, it is particularly useful as the material of an optical lens which is thin and small in size and has a complex shape. As a lens size, the thickness of the center part of the lens is 0.05 to 3.0 mm, preferably 0.05 to 2.0 mm, more preferably 0.1 to 2.0 mm. The diameter of the lens is 1.0 to 20.0 mm, preferably 1.0 to 10.0 mm, more preferably 3.0 to 10.0 mm. It is preferably a meniscus lens which is convex on one side and concave on the other side.

The surface of the optical lens of the present invention may have a coating layer such as an antireflection layer or a hard coat layer as required. The antireflection layer may be a single layer or a multi-layer and composed of an organic material or inorganic material but preferably an inorganic material. Examples of the inorganic material include oxides and fluorides such as silicon oxide, aluminum oxide, zirconium oxide, titanium oxide, cerium oxide, magnesium oxide and magnesium fluoride.

The optical lens of the present invention may be formed by an arbitrary method such as metal molding, cutting, polishing, laser machining, discharge machining or edging. Metal molding is preferred.

EXAMPLES

The following examples are provided to further illustrate the present invention.

1. Evaluation samples were prepared by the following methods.

(a) Cast film:

5 g of the obtained polycarbonate was dissolved in 50 ml of methylene chloride, and the resulting solution was cast over a glass petri dish. After it was fully dried at room temperature, it was dried at a temperature ranging from Tg of the polycarbonate to 20 °C or less for 8 hours to produce a cast film.

(b) Spherical lens:

After the obtained polycarbonate was vacuum dried at 120°C for 8 hours, it was injection molded into a lens

having a thickness of 0.2 mm, a convex surface curvature radius of 5 mm, a concave surface curvature radius of 4 mm and a Φ of 5 mm at a molding temperature of Tg+110°C and a mold temperature of Tg-10°C by using the SE30DU injection molding machine of Sumitomo Heavy Industries Ltd.

(c) Molded pieces

Molded pieces having a width of 2.5 cm, a length of 5 cm and thicknesses of 1 mm, 2 mm and 3 mm were injection molded in the same manner as in (b) above.

2. Evaluations were made by the following methods.

(1) Specific viscosity:

After the polycarbonate obtained after the end of polymerization was fully dried, the specific viscosity ($\eta_{sp}$) at 20°C of a solution prepared by dissolving 0.7 g of the polycarbonate in 100 ml of methylene chloride was measured.

(2) Copolymerization ratio:

The polycarbonate obtained after the end of polymerization was measured by using the proton NMR of the JNM-AL400 of JEOL Ltd. For example, in Examples 2 to 5, the copolymerization ratio was obtained from the integral ratio of a peak derived from the aromatic group of 10, 10-bis(4-hydroxyphenyl)anthrone at 8.3 to 8.2 ppm and a peak derived from the aromatic ring of 1,1-bi(2-(2-hydroxyethoxy)naphthalene) at 7.9 to 7.7 ppm.

(3) Glass transition point (Tg):

The polycarbonate was measured at a temperature elevation rate of 20°C/min by means of the 910 type DSC of Du Pont.

(4) Melt viscosity:

After the polycarbonate obtained after the end of polymerization was dried at 120°C for 4 hours, the melt viscosity was measured at 260°C and a shear rate of 1, 000/sec by means of the ID capillograph of Toyo Seiki Kogyo Co. , Ltd.

(5) Spectral transmittance:

A 0.1 mm-thick disk obtained by injection molding was measured by using the U-3310 spectrophotometer of Hitachi Ltd. The evaluation was made as follows.

Transmittance at 395 nm of not less than 80 %: ○
Transmittance at 395 nm of less than 80 %: ×

(6) Refractive index (nd), Abbe number (v):

The refractive index at 25°C (wavelength: 589 nm) and Abbe number of a 0.3 nun-thick disk obtained by injection molding in accordance with the method of (c) were measured by using the DR-M2 Abbe refractometer of ATAGO Mfg. Co. , Ltd.

(7) Optical distortion:

An aspherical lens molded by the method of (b) was sandwiched between two polarizing sheets, and light leakage from the back of the resulting laminate was visually checked by a crossed Nicol method to evaluate an optical distortion. Evaluation was made based on the following criteria.

◎ Almost no light leakage
○: Slightly light leakage is observed
×: Light leakage is remarkable

(8) Moldability:

A filling failure, a molding failure, brittleness and the existence of a mold deposit of an aspherical lens molded by the method of (b) were checked visually. For evaluation, 500 molded aspherical lenses were classified into (◎) having a probability of becoming defective products of less than 1 %, (○) having a probability of 1 % to less than 5 %, (Δ) having a probability of 5 % to less than 10 % and (×) having a probability of 10 % or more.

(9) Moist heat resistance:

After a 1 mm-thick molded piece was left at 85°C and 85 %RH for 2,000 hours, the specific viscosity ($\eta_{sp}$) at 20°C of a solution prepared by dissolving 0.7 g of the molded piece in 100 ml of methylene chloride was measured to obtain a specific viscosity retention (molecular weight retention) after a moist heat test. The specific viscosity retention (molecular weight retention) was used as an index of moist heat resistance.

$$\Delta\eta_{sp} = (\eta_{sp1}/\eta_{sp0}) \times 100$$

$\Delta\eta_{sp}$: specific viscosity retention, $\eta_{sp0}$: specific viscosity before test, $\eta_{sp1}$: specific viscosity after test

Reference Example 1

374.44 parts by weight of 1,1-bi(2-(2-hydroxyethoxy)naphthalene (may be abbreviated as "BL-2EO" hereinafter), 222. 79 parts by weight of diphenyl carbonate (DPC) and 1.82 x $10^{-2}$ part by weight of tetramethylammonium hydroxide were put into a reaction oven equipped with a stirrer and a distillation unit, heated at 180°C under normal pressure in a nitrogen atmosphere and stirred for 20 minutes. Thereafter, the pressure was reduced to 20 to 30 kPa over 20 minutes and the temperature was raised to 260°C at a rate of 60°C/hr to carry out a transesterification reaction. Then, while the temperature was kept at 260°C, the pressure was reduced to 0.13 kPa or less over 120 minutes to carry out a polymerization reaction under agitation at 260°C and 0.13 kPa or less for 1 hour.

Example 1

Polymerization was carried out at 260°C and 0.13 kPa or less in the same manner as in Reference Example 1 except that 355.72 parts by weight of BL-2EO, 18.92 parts by weight of 10,10-bis(4-hydroxyphenyl)anthrone (may be abbreviated as "BP-ANT" hereinafter) and 222.79 g of DPC were used and the reaction time was changed to 0.5 hour.
The polycarbonate had a BL-2EO/BP-ANT molar ratio of 95:5, a specific viscosity of 0.260 and a Tg of 123°C.
After the obtained polycarbonate was vacuum dried at 123°C for 4 hours, 0.050 % of bis(2,4-dicumylphenyl)pentaerythritol diphosphite and 0.10 % of pentaerythritol tetrastearate were added based on the weight of the obtained polycarbonate composition, and the obtained product was pelletized by means of a vented single-screw extruder having a screw diameter of 30 mm. The obtained pellet had satisfactory moist heat resistance and a specific viscosity retention after a moist heat test of 95 %.

Example 2

Polymerization was carried out at 260°C and 0.13 kPa or less in the same manner as in Reference Example 1 except that 337.00 parts by weight of BL-2EO, 37.84 parts by weight of BP-ANT and 222.79 g of DPC were used and the reaction time was changed to 0.5 hour.
The polycarbonate had a BL-2EO/BP-ANT molar ratio of 90:10, a specific viscosity of 0.250 and a Tg of 125°C.
After the obtained polycarbonate was vacuum dried at 120°C for 4 hours, 0.050 % of bis(2,4-dicumylphenyl)pentaerythritol diphosphite and 0.10% of pentaerythritol tetrastearate were added based on the weight of the obtained polycarbonate composition, and the obtained product was pelletized by means of a vented single-screw extruder having a screw diameter of 30 mm. The obtained pellet had satisfactory moist heat resistance and a specific viscosity retention after a moist heat test of 93 %.

Example 3

Polymerization was carried out in the same manner as in Reference Example 1 except that 262.11 parts by weight of BL-2EO and 113.53 parts by weight of BP-ANT were used.

The polycarbonate had a BL-2EO/BP-ANT molar ratio of 70:30, a specific viscosity of 0.230 and a Tg of 140°C.
After the obtained polycarbonate was vacuum dried at 120°C for 4 hours, 0.050 % of bis(2,4-dicumylphenyl)pentaerythritol diphosphite and 0.10 % of pentaerythritol tetrastearate were added based on the weight of the obtained polycarbonate composition, and the obtained product was pelletized by means of a vented single-screw extruder having a screw diameter of 30 mm. The obtained pellet had satisfactory moist heat resistance and a specific viscosity retention after a moist heat test of 93%.

Example 4

Polymerization was carried out in the same manner as in Reference Example 1 except that 187.22 parts by weight of BL-2EO and 189.22 parts by weight of BP-ANT were used.
The polycarbonate had a BL-2EO/BP-ANT molar ratio of 50:50, a specific viscosity of 0.240 and a Tg of 150°C.
After the obtained polycarbonate was vacuum dried at 120°C for 4 hours, 0.050 % of bis(2,4-dicumylphenyl)pentaerythritol diphosphite and 0.10 % of pentaerythritol tetrastearate were added based on the weight of the obtained polycarbonate composition, and the obtained product was pelletized by means of a vented single-screw extruder having a screw diameter of 30 mm. The obtained pellet had satisfactory moist heat resistance and a specific viscosity retention after a moist heat test of 95 %.

Example 5

Polymerization was carried out at 260°C and 0.13 kPa or less in the same manner as in Reference Example 1 except that 149.78 parts by weight of BL-2EO, 227.06 parts by weight of BP-ANT and 222.79 g parts by weight of DPC were used and the reaction time was changed to 0.5 hour.
The polycarbonate had a BL-2EO/BP-ANT molar ratio of 40:60, a specific viscosity of 0.230 and a Tg of 166°C.
After the obtained polycarbonate was vacuum dried at 120°C for 4 hours, 0.050 % of bis(2,4-dicumylphenyl)pentaerythritol diphosphite and 0.10 % of pentaerythritol tetrastearate were added based on the weight of the obtained polycarbonate composition, and the obtained product was pelletized by means of a vented single-screw extruder having a screw diameter of 30 mm. The obtained pellet had satisfactory moist heat resistance and a specific viscosity retention after a moist heat test of 98 %.

Comparative Example 1

Polymerization was carried out in the same manner as in Reference Example 1 except that 378.43 parts by weight of BP-ANT was used.
The polycarbonate had a BL-2EO/BP-ANT molar ratio of 0:100, a specific viscosity of 0.220 and a Tg of 200°C.
After the obtained polycarbonate was vacuum dried at 120°C for 4 hours, 0.050 % of bis(2,4-dicumylphenyl)pentaerythritol diphosphite and 0.10 % of pentaerythritol tetrastearate were added based on the weight of the obtained polycarbonate composition, and the obtained product was pelletized by means of a vented single-screw extruder having a screw diameter of 30 mm. The obtained pellet had satisfactory moist heat resistance and a specific viscosity retention after a moist heat test of 93 %.

Comparative Example 2

Polymerization was carried out in the same manner as in Reference Example 1 except that 189.22 parts by weight of BP-ANT and 143.17 parts by weight of 1,1'-bi-2-naphthol (may be referred to as "BN" hereinafter) were used.
The polycarbonate had a BP-ANT/BN molar ratio of 50:50, a specific viscosity of 0.210 and a Tg of 220°C.
After the obtained polycarbonate was vacuum dried at 120°C for 4 hours, 0.050 % of bis(2,4--dicumylphenyl)pentaerythritol diphosphite and 0.10 % of pentaerythritol tetrastearate were added based on the weight of the obtained polycarbonate composition, and the obtained product was pelletized by means of a vented single-screw extruder having a screw diameter of 30 mm.

Comparative Example 3

Polymerization was carried out in the same manner as in Example 4 except that 70.08 parts by weight of bisphenol fluorene (may be abbreviated as "BPFL" hereinafter) and 74.89 parts by weight of BL-2EO were used.
The polycarbonate had a BPFL/BL-2EO molar ratio of 50:50, a specific viscosity of 0.230 and a Tg of 159°C.
After the obtained polymer was vacuum dried at 120°C for 4 hours, 0.050 % of bis(2,4-dicumylphenyl)pentaerythritol diphosphite and 0.10 % of pentaerythritol tetrastearate were added based on the weight of the obtained polycarbonate composition, and the obtained product was pelletized by means of a vented single-screw extruder having a screw diameter of 30 mm.

Comparative Example 4

19.206 parts by weight of ion exchange water and 29.33 parts by weight of a 48 % sodium hydroxide aqueous solution were put into a reactor equipped with a thermometer, a stirrer and a reflux cooler, 8.40 parts by weight of 9,9-bis(4-hydroxy-3-methylphenyl)fluorene (may be referred to as "biscresol fluorene" or "BCF" hereinafter) , 26. 97 parts by weight of BP-ANT and 0.07 part by weight of hydrosulfite were dissolved in the resulting solution, 138.71 parts by weight of chloroform was added, and 12.06 parts by weight of phosgene was blown into the reactor at 15 °C to 25°C under agitation for 60 minutes. After phosgene was blown, a solution prepared by dissolving 0.4668 part by weight of p-tert-butyl phenol in 5 parts by weight of methylene chloride and 3.67 parts by weight of a 48 % sodium hydroxide aqueous solution were added to emulsify the obtained product, and 0. 02 part by weight of triethylamine was added and stirred at 28°C to 33°C for 1 hour to terminate a reaction. After the end of the reaction, the product was diluted with methylene chloride, rinsed, made acidic with hydrochloric acid and rinsed. When the conductivity of a water phase became almost the same as that of ion exchange water, a methylene chloride phase was concentrated and dehydrated to obtain a solution having a polycarbonate concentration of 20 %. A polycarbonate obtained by removing the solvent from this solution had a BP-ANT/BCF molar ratio of 75:25. This polymer had a specific viscosity of 0.290 and a Tg of 260°C.

Table 1

| | BL-2EO | BP-ANT | BPFL | BCF | BN | ηsp | Refractive | Δn | Tg |
|---|---|---|---|---|---|---|---|---|---|
| | mol% | mol% | mol% | mol% | mol% | | index | $X10^{-3}$ | °C |
| Ex.1 | 95 | 5 | - | - | - | 0.260 | 1.667 | 3.3 | 123 |
| Ex.2 | 90 | 10 | - | - | - | 0.250 | 1.667 | 3.0 | 125 |
| Ex.3 | 70 | 30 | - | - | - | 0.230 | 1.665 | 2.0 | 140 |
| Ex.4 | 50 | 50 | - | - | - | 0.240 | 1.663 | 0.5 | 150 |
| Ex.5 | 40 | 60 | - | - | - | 0.230 | 1.662 | 1.5 | 166 |
| C.Ex.1 | - | 100 | - | - | - | 0.220 | 1.660 | >4 | 200 |
| C.Ex.2 | - | 50 | - | - | 50 | 0.210 | 1.670 | 2.5 | 220 |
| C.Ex.3 | 50 | - | 50 | - | - | 0.230 | 1.653 | 1.5 | 159 |
| C.Ex.4 | - | 75 | - | 25 | - | 0.290 | 1.643 | >4 | 260 |

Ex.: Example, C.Ex.: Comparative Example

Table 1(continued)

| | Spectral transmittance | Aspherical lens | | Melt viscosity |
|---|---|---|---|---|
| | % | Optical distortion | Moldability | Pa · s |
| Ex.1 | ○ | ○ | ◎ | 60 |
| Ex.2 | ○ | ○ | ◎ | 70 |
| Ex.3 | ○ | ○ | ◎ | 95 |
| Ex.4 | ○ | ◎ | ◎ | 170 |
| Ex.5 | ○ | ○ | ○ | 250 |
| C.Ex.1 | ○ | × | × | 300 |
| C.Ex.2 | ○ | ○ | × | 400 |
| C.Ex.3 | ○ | ◎ | ○ | 200 |
| C.Ex.4 | ○ | × | × | Not measurable |

Ex.: Example, C.Ex.: Comparative Example

Since the polycarbonates obtained in Examples 1 to 5 have a high refractive index and extremely high moldability, the optical distortions of optical lenses obtained by injection molding these polycarbonates are small. In contrast to this, the polycarbonates obtained in Comparative Examples 1 to 4 have a high Tg and low moldability. Since the polycarbonate of Comparative Example 4 has a low refractive index, its use is limited.

Effect of the Invention

The polycarbonate of the present invention has excellent transparency, a high refractive index, low birefringence, high moldability and high moist heat resistance.

Industrial Applicability

An optical lens comprising of the polycarbonate of the present invention can be used in fields where expensive high-refractive index glass lenses have been used, such as optical lenses, cameras including digital video cameras, telescopes, binoculars, TV projectors and prisms.

Basic Application

The present invention is based on the following invention

1. A polycarbonate comprising 100 to 2 mol% of a constituent unit represented by the following formula (I) and having a specific viscosity of 0.12 to 0.40.

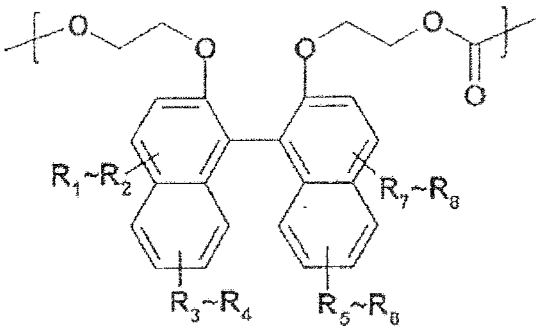

(I)

(In the formula (I), $R_1$ to $R_8$ are each independently a hydrogen atom, fluorine atom, chlorine atom, bromine atom, iodine atom, alkyl group having 1 to 6 carbon atoms, aryl group having 6 to 12 carbon atoms, alkenyl group having 2 to 6 carbon atoms, alkoxy group having 1 to 6 carbon atoms or aralkyl group having 7 to 17 carbon atoms.)

2. The polycarbonate according to claim 1, comprising the constituent unit represented by the general formula (I) and a recurring unit represented by the following general formula (II), the molar ratio of the general formula (I) to the general formula (II) being 100:0 to 2:98, and having a specific viscosity measured at 20°C of a solution prepared by dissolving 0.7 g of the polycarbonate in 100 ml of methylene chloride of 0.12 to 0.40.

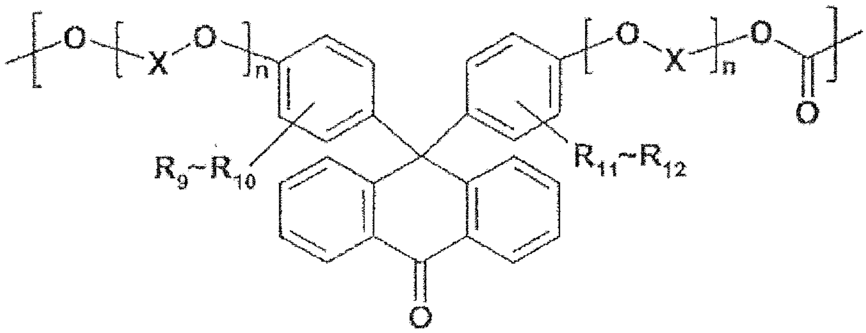

(II)

(In the formula (II), $R_9$ to $R_{12}$ are each independently a hydrogen atom, hydrocarbon group which may contain an aromatic group having 1 to 9 carbon atoms, or halogen atom. X is an alkylene group, and "n" is an integer of 0 to 3.)

3. The polycarbonate according to claim 1 or 2, comprising 90 to 40 mol% of the constituent unit represented by the above formula (I) and having a specific viscosity of 0.14 to 0.40.

4. The polycarbonate according to any one of claims 1 to 3, wherein the constituent unit represented by the formula (I) is 1,1-bi(2-(2-hydroxyethoxy)naphthalene).

5. The polycarbonate according to any one of claims 1 to 4, wherein the constituent unit represented by the formula (II) is 10,10-bis(4-hydroxyphenyl)anthrone.

6. An optical member comprising the polycarbonate of any one of claims 1 to 5.

7. An optical lens comprising the polycarbonate of claim 6.

8. The optical lens according to claim 7, wherein the thickness of a center part is 0.05 to 3.0 mm and the diameter of a lens part is 1.0 to 20.0 mm.

9. A process for producing the polycarbonate of any one of claims 1 to 5, comprising the step of reacting diols represented by formulas (III) and (IV) and an ester carbonate forming compound.

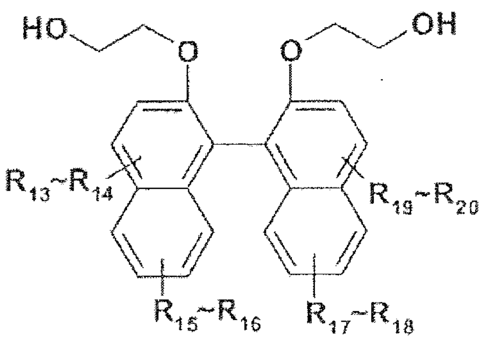

(III)

(In the formula (III), $R_{13}$ to $R_{20}$ are each independently a hydrogen atom, fluorine atom, chlorine atom, bromine atom, iodine atom, alkyl group having 1 to 6 carbon atoms, aryl group having 6 to 12 carbon atoms, alkenyl group having 2 to 6 carbon atoms, alkoxy group having 1 to 6 carbon atoms or aralkyl group having 7 to 17 carbon atoms.)

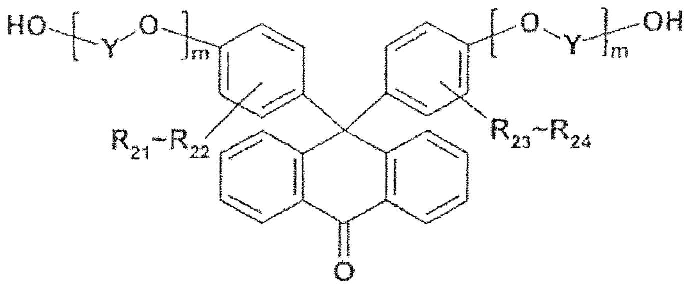

(I V)

(In the formula (IV), $R_{21}$ to $R_{24}$ are each independently a hydrogen atom, hydrocarbon group which may contain an aromatic group having 1 to 9 carbon atoms, or halogen atom, Y is an alkylene group, and "n" is an integer of 0 to 3.)

## Claims

1. A polycarbonate comprising 98 to 2 mol% of a unit represented by the following formula (I) and 2 to 98 mol% of a unit represented by the following formula (II) and having a specific viscosity measured at 20°C of a solution prepared by dissolving 0.7 g of the polycarbonate in 100 ml of methylene chloride of 0.12 to 0.40.

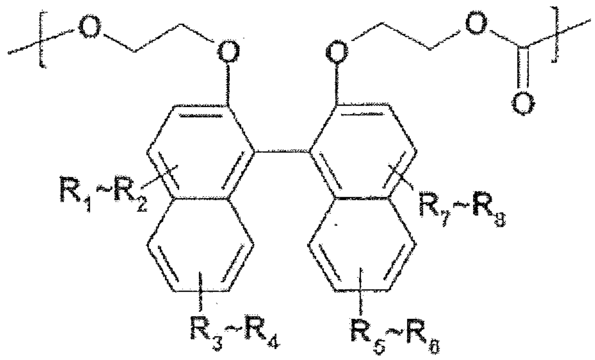

( I )

(In the formula (I), $R_1$ to $R_8$ are each independently a hydrogen atom, fluorine atom, chlorine atom, bromine atom, iodine atom, alkyl group having 1 to 6 carbon atoms, aryl group having 6 to 12 carbon atoms, alkenyl group having 2 to 6 carbon atoms, alkoxy group having 1 to 6 carbon atoms or aralkyl group having 7 to 17 carbon atoms.)

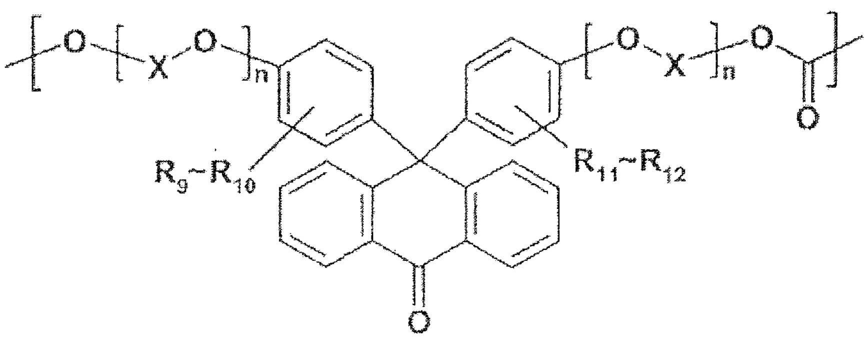

( I I )

(In the formula (II), $R_9$ to $R_{12}$ are each independently a hydrogen atom, hydrocarbon group which may contain an aromatic group having 1 to 9 carbon atoms, or halogen atom. X is an alkylene group, and "n" is an integer of 0 to 3.)

2. The polycarbonate according to claim 1, comprising 90 to 40 mol% of the unit represented by the formula (I) and

10 to 60 mol% of the unit represented by the formula (II) and having a specific viscosity of 0.14 to 0.40.

**3.** The polycarbonate according to claim 1, wherein the unit represented by the formula (I) is a unit derived from 1,1-bi(2-(2-hydroxyethoxy)naphthalene).

**4.** The polycarbonate according to claim 1, wherein the unit represented by the formula (II) is a unit derived from 10,10-bis(4-hydroxyphenyl)anthrone.

**5.** An optical member comprising the polycarbonate of any one of claims 1 to 4.

**6.** An optical lens including the optical member of claim 5.

**7.** The optical lens according to claim 6, wherein the thickness of a center part is 0.05 to 3.0 mm and the diameter of a lens part is 1.0 to 20.0 mm.

**8.** A process for producing the polycarbonate of claim 1, comprising the step of reacting a diol represented by the following formula (III), a diol represented by the following formula (IV) and an ester carbonate forming compound.

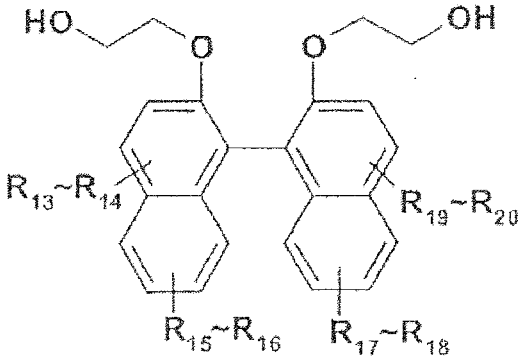

(III)

(In the formula (III), $R_{13}$ to $R_{20}$ are each independently a hydrogen atom, fluorine atom, chlorine atom, bromine atom, iodine atom, alkyl group having 1 to 6 carbon atoms, aryl group having 6 to 12 carbon atoms, alkenyl group having 2 to 6 carbon atoms, alkoxy group having 1 to 6 carbon atoms or aralkyl group having 7 to 17 carbon atoms.)

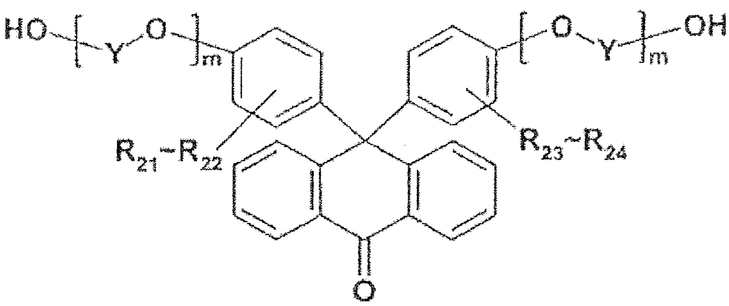

(IV)

(In the formula (IV), $R_{21}$ to $R_{24}$ are each independently a hydrogen atom, hydrocarbon group which may contain an aromatic group having 1 to 9 carbon atoms, or halogen atom, Y is an alkylene group, and "m" is an integer of 0 to 3.)

**Patentansprüche**

**1.** Polycarbonat, das 98 bis 2 mol% einer Einheit, dargestellt durch die folgende Formel (I), und 2 bis 98 mol% einer Einheit, dargestellt durch die folgende Formel (II) umfasst und das eine spezifische Viskosität, gemessen bei 20°C mit einer Lösung, die durch Lösen von 0,7 g des Polycarbonats in 100 ml Methylenchlorid hergestellt wurde, von 0,12 bis 0,40 hat.

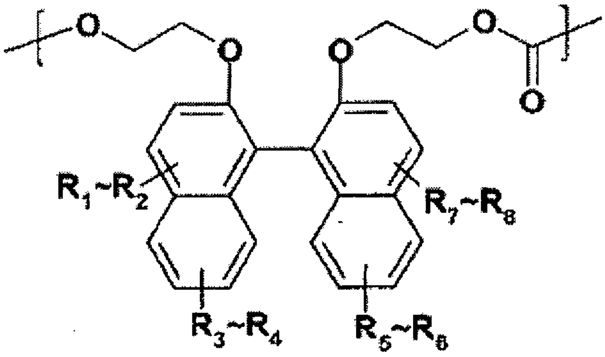

(I)

(In der Formel (I) sind $R_1$ bis $R_8$ jeweils unabhängig ein Wasserstoffatom, ein Fluoratom, Chloratom, Bromatom, Iodatom, eine Alkylgruppe mit 1 bis 6 Kohlenstoffatomen, Arylgruppe mit 6 bis 12 Kohlenstoffatomen, Alkenylgruppe mit 2 bis 6 Kohlenstoffatomen, Alkoxygruppe mit 1 bis 6 Kohlenstoffatomen oder Aralkylgruppe mit 7 bis 17 Kohlenstoffatomen)

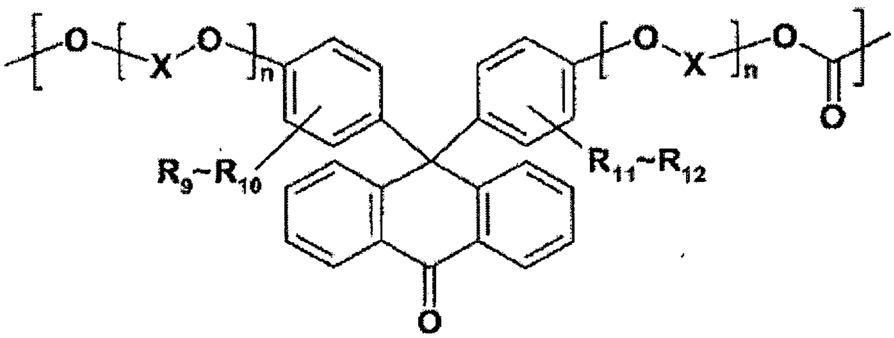

(II)

(In der Formel (II) sind $R_9$ bis $R_{12}$ jeweils unabhängig ein Wasserstoffatom, eine Kohlenwasserstoffgruppe, welche eine aromatische Gruppe enthalten kann, die 1 bis 9 Kohlenstoffatome hat, oder ein Halogenatom. Ist X eine Alkylengruppe und ist "un" eine ganze Zahl von 0 bis 3).

**2.** Polycarbonat gemäß Anspruch 1, das 90 bis 40 mol% der Einheit, dargestellt durch die Formel (I), und 10 bis 60 mol% der Einheit, dargestellt durch die Formel (II) umfasst und das eine spezifische Viskosität von 0,14 bis 0,40 hat.

**3.** Polycarbonat gemäß Anspruch 1, wobei die Einheit, die durch Formel (I) dargestellt wird, eine Einheit ist, die von 1,1-Bi(2-(2-hydroxyethoxy)naphthalin) stammt.

**4.** Polycarbonat gemäß Anspruch 1, wobei die Einheit, die durch die Formel (II) dargestellt wird, eine Einheit ist, die von 10,10-Bis(4-hydroxyphenyl)anthron stammt.

**5.** Optisches Element, umfassend das Polycarbonat gemäß einem der Ansprüche 1 bis 4.

**6.** Optische Linse, umfassend das optische Element gemäß Anspruch 5.

**7.** Optische Linse gemäß Anspruch 6, wobei die Dicke eines Mittelteils 0,05 bis 3,0 mm ist und der Durchmesser eines Linsenteils 1,0 bis 20,0 mm ist.

**8.** Verfahren zur Herstellung des Polycarbonats gemäß Anspruch 1, umfassend den Schritt des Umsetztens eines Diols, dargestellt durch die folgende Formel (III), eines Diols, dargestellt durch die folgende Formel (IV), und einer Estercarbonat-bildenden Verbindung.

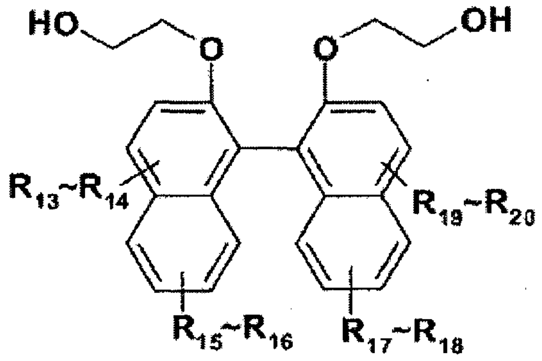

(I I I)

(In der Formel (III) sind $R_{13}$ bis $R_{20}$ jeweils unabhängig ein Wasserstoffatom, Fluoratom, Chloratom, Bromatom, Iodatom, eine Alkylgruppe mit 1 bis 6 Kohlenstoffatomen, eine Arylgruppe mit 6 bis 12 Kohlenstoffatomen, eine Alkenylgruppe mit 2 bis 6 Kohlenstoffatomen, eine Alkoxygruppe mit 1 bis 6 Kohlenstoffatomen oder eine Aralkylgruppe mit 7 bis 17 Kohlenstoffatomen)

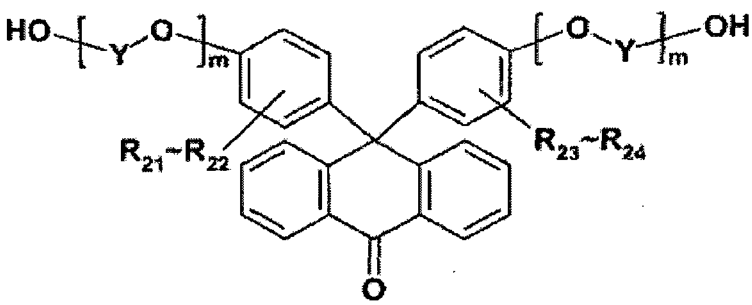

(I V)

(In der Formel (IV) sind $R_{21}$ bis $R_{24}$ jeweils unabhängig ein Wasserstoffatom, eine Kohlenwasserstoffgruppe, welche eine aromatische Gruppe enthalten kann, die 1 bis 9 Kohlenstoffatome hat, oder ein Halogenatom, ist Y eine Alkylengruppe und ist "m" eine ganze Zahl von 0 bis 3).

## Revendications

1. Polycarbonate comprenant 98 à 2 % en mole d'une unité représentée par la formule suivante (I) et 2 à 98 % en mole d'une unité représentée par la formule suivante (II) et présentant une viscosité spécifique mesurée à 20 °C d'une solution préparée par dissolution de 0,7 g du polycarbonate dans 100 ml de chlorure de méthylène de 0,12 à 0,40.

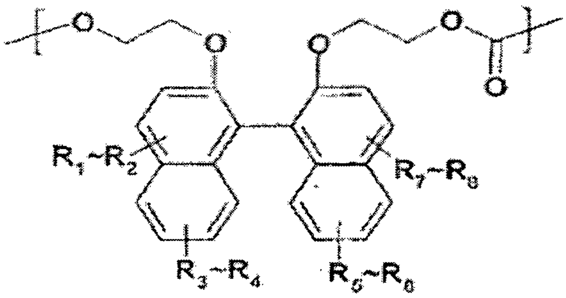

( I )

(Dans la formule (I), $R_1$ à $R_8$ sont chacun indépendamment un atome d'hydrogène, un atome de fluor, un atome de chlore, un atome de brome, un atome d'iode, un groupe alkyle présentant 1 à 6 atomes de carbone, un groupe aryle présentant 6 à 12 atomes de carbone, un groupe alcényle présentant 2 à 6 atomes de carbone, un groupe

alcoxy présentant 1 à 6 atomes de carbone ou un groupe aralkyle présentant 7 à 17 atomes de carbone.)

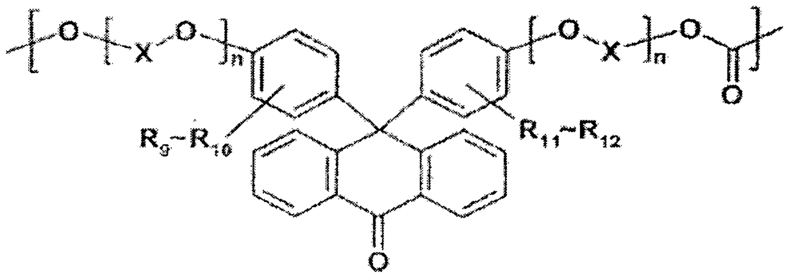

(I I)

(Dans la formule (II), $R_9$ à $R_{12}$ sont chacun indépendamment un atome d'hydrogène, un groupe hydrocarbure qui peut contenir un groupe aromatique présentant 1 à 9 atomes de carbone, ou un atome d'halogène. X est un groupe alkylène, et « n » est un entier de 0 à 3.)

**2.** Polycarbonate selon la revendication 1, comprenant 90 à 40 % en mole de l'unité représentée par la formule (I) et 10 à 60 % en mole de l'unité représentée par la formule (II) et présentant une viscosité spécifique de 0,14 à 0,40.

**3.** Polycarbonate selon la revendication 1, dans lequel l'unité représentée par la formule (I) est une unité dérivée de 1,1-bi(2-(2-hydroxyéthoxy)naphtalène).

**4.** Polycarbonate selon la revendication 1, dans lequel l'unité représentée par la formule (II) est une unité dérivée de 10,10-bis(4-hydroxyphényl)anthrone.

**5.** Élément optique comprenant le polycarbonate selon l'une quelconque des revendications 1 à 4.

**6.** Lentille optique incluant l'élément optique selon la revendication 5.

**7.** Lentille optique selon la revendication 6, dans laquelle l'épaisseur d'une partie centrale est de 0,05 à 3,0 mm et le diamètre d'une partie de lentille est de 1,0 à 20,0 mm.

**8.** Processus de production du polycarbonate selon la revendication 1, comprenant l'étape de réaction d'un diol représenté par la formule suivante (III), un diol représenté par la formule suivante (IV) et un composé formant un ester carbonique.

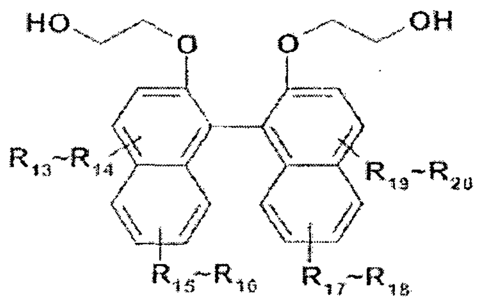

(I I I)

(Dans la formule (III), $R_{13}$ à $R_{20}$ sont chacun indépendamment un atome d'hydrogène, un atome de fluor, un atome de chlore, un atome de brome, un atome d'iode, un groupe alkyle présentant 1 à 6 atomes de carbone, un groupe aryle présentant 6 à 12 atomes de carbone, un groupe alcényle présentant 2 à 6 atomes de carbone, un groupe alcoxy présentant 1 à 6 atomes de carbone ou un groupe aralkyle présentant 7 à 17 atomes de carbone.)

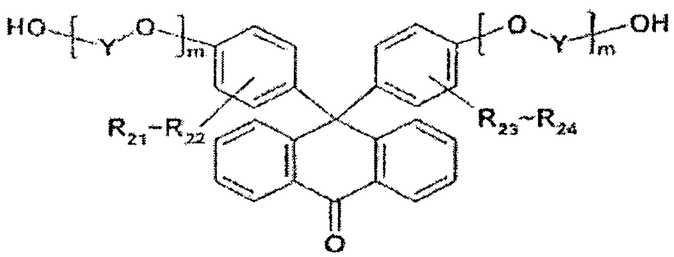

(I V)

(Dans la formule (IV), $R_{21}$ à $R_{24}$ sont chacun indépendamment un atome d'hydrogène, un groupe hydrocarbure qui peut contenir un groupe aromatique présentant 1 à 9 atomes de carbone, ou un atome d'halogène, Y est un groupe alkylène, et « m » est un entier de 0 à 3.)

Fig. 1

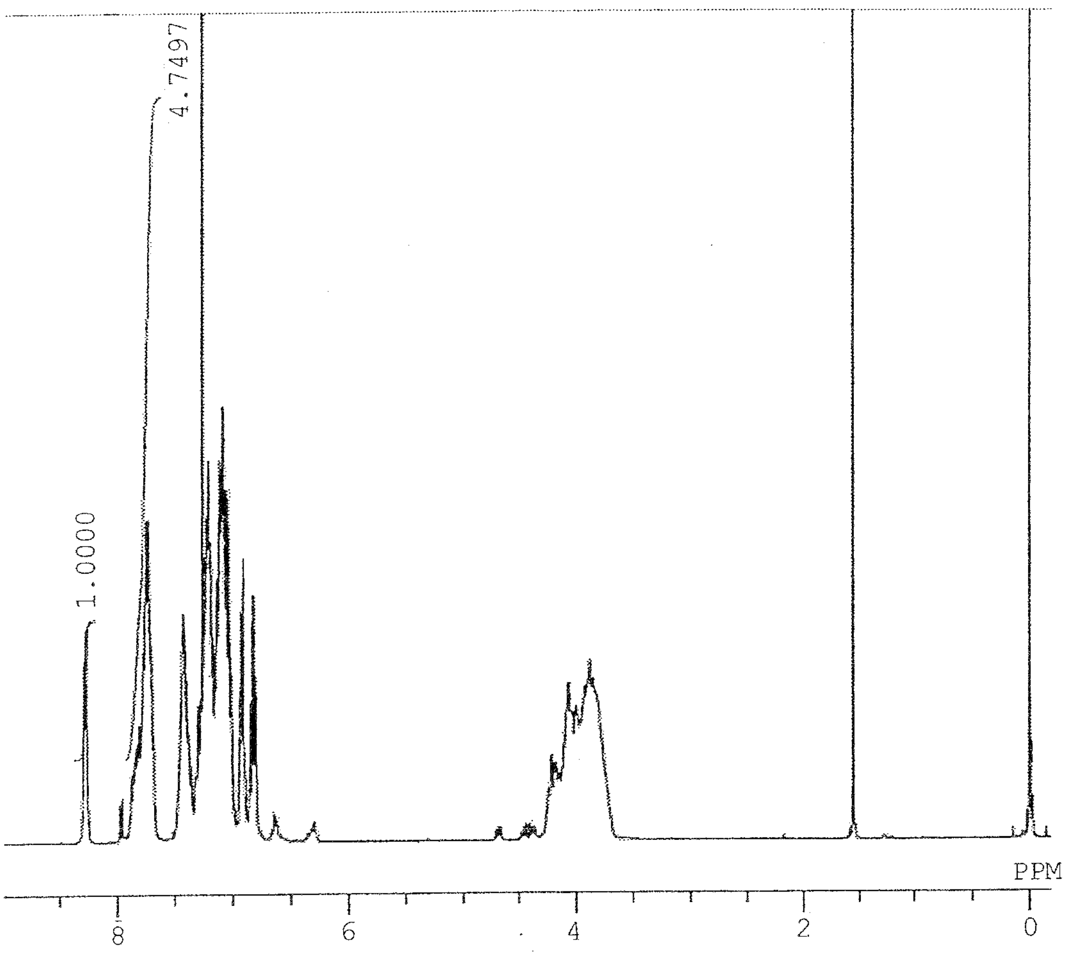

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014038772 A
- JP 2002332345 A
- JP 10007782 A
- JP 2010275412 A
- WO 2014073496 A